# EUROPEAN PATENT APPLICATION

(11) **EP 4 764 873 A1**
(43) Date of publication of application: **24.06.2026**
(21) Application number: 24858343.7
(22) Date of filing: 16.08.2024
(51) Int. Cl.: G06F 12/1009

(54) **TRANSLATION LOOKASIDE BUFFER INVALIDATION METHOD, DATA PROCESSING APPARATUS, AND READABLE MEDIUM**

(30) Priority: 25.08.2023 CN 202311085596
(71) Applicant: Sanechips Technology Co., Ltd., Shenzhen, Guangdong 518055 (CN)
(72) Inventor: DU, Yongchao, Shenzhen, Guangdong 518055 (CN)
(74) Representative: Canzler & Bergmeier Patentanwälte Partnerschaft mbB
(86) International application number: PCT/CN2024/112782
(87) International publication number: WO 2025/044800

(57) **Abstract**

Provided in the present disclosure is a translation lookaside buffer invalidation method. The method comprises: a first data processing apparatus in a first processing core sending invalidation operation information to a miscellaneous node, wherein the invalidation operation information at least comprises invalidation operation information which has not been defined in an ARM instruction set and has been defined in a non-ARM instruction set, and the miscellaneous node notifies a second data processing apparatus in a second processing core to execute a translation lookaside buffer invalidation operation on the basis of the invalidation operation information. Further provided in the present disclosure are a data processing apparatus and a readable medium.

## Description

### CROSS-REFERENCE TO RELATED APPLICATIONS

This application claims the priority of Chinese patent application No. 202311085596.5 filed on August 25, 2023, the disclosure of which is hereby incorporated by reference in its entirety.

### TECHNICAL FIELD

The present disclosure relates to the field of computer technology, and specifically relates to a translation lookaside buffer invalidation method, a data processing apparatus and a readable medium.

### BACKGROUND

In a system on chip (SOC) composed of a single processor, a processor cluster, a graphics processor, a memory controller, and the like, the coherent hub interface (CHI) bus is one of the most common interconnection bus protocols, and has the characteristic s of high flexibility and extensibility, and the capability of meeting different requirements on performance, power consumption, and area.

The CHI architecture provides a complete distributed virtual memory (DVM) processing flow, and thus enables efficient management of a virtual memory. However, since types of the supported translation lookaside buffer invalidation (TLBI) operation requests are limited to an advanced reduced instruction set computer (RISC) machine (ARM) instruction set, that is, various transactions defined by the CHI protocol are strongly correlated with the ARM instruction set, there is no corresponding solutions in the CHI protocol for TLBI operations not supported by the ARM instruction set. For example, the CHI protocol does not support address space identifier (ASID) related TLBI operations at exception level (EL) 3, but some instruction sets, such as a RISC-V instruction set, support ASID related TLBI operation in M-mode (EL3), which leads to a compatibility problem when implementing the CHI protocol in a SoC that includes a non-ARM instruction set based CPU (non-ARM ISA CPU).

### SUMMARY

The present disclosure provides a translation lookaside buffer invalidation method, a data processing apparatus and a readable medium.

In a first aspect, an embodiment of the present disclosure provides a translation lookaside buffer invalidation method, which is applied to a first data processing apparatus in a first processing core and includes: sending invalidation operation information to a miscellaneous node for the miscellaneous node to notify a second data processing apparatus in a second processing core to execute a translation lookaside buffer invalidation operation based on the invalidation operation information; wherein the invalidation operation information includes at least invalidation operation information not defined in an ARM instruction set but defined in a non-ARM instruction set.

In another aspect, an embodiment of the present disclosure further provides a data processing apparatus, including: one or more execution units; a storage device having one or more programs stored thereon; wherein when executed by the one or more execution units, the one or more programs cause the one or more execution units to implement the translation lookaside buffer invalidation method as described above; and one or more I/O interfaces connected between the execution units and the storage device and configured to enable information interaction between the execution units and the storage device.

In another aspect, an embodiment of the present disclosure further provides a computer-readable medium having a computer program stored thereon which, when executed, causes the translation lookaside buffer invalidation method as described above to be implemented.

### BRIEF DESCRIPTION OF DRAWINGS

FIG. 1 is a first flowchart illustrating a translation lookaside buffer invalidation process with a first data processing apparatus as an executor according to an embodiment of the present disclosure;
FIG. 2 is a schematic flowchart of sending invalidation operation information to a miscellaneous node according to an embodiment of the present disclosure;
FIG. 3 is a second flowchart illustrating a translation lookaside buffer invalidation process with a first data processing apparatus as an executor according to an embodiment of the present disclosure;
FIG. 4 is a schematic diagram of a translation lookaside buffer invalidation process according to a specific example of the present disclosure;
FIG. 5 is a first flowchart illustrating a translation lookaside buffer invalidation process with a second data processing apparatus as an executor according to an embodiment of the present disclosure;
FIG. 6 is a second flowchart illustrating a translation lookaside buffer invalidation process with a second data processing apparatus as an executor according to an embodiment of the present disclosure; and
FIG. 7 is a schematic structural diagram of a data processing apparatus according to an embodiment of the present disclosure.

### DETAIL DESCRIPTION OF EMBODIMENTS

Exemplary embodiments will be described more sufficiently below with reference to the accompanying drawings, but which may be embodied in different forms and should not be construed as limited to the embodiments set forth herein. Rather, these embodiments are provided so that the present disclosure will be thorough and complete, and will fully convey the scope of the present disclosure to those skilled in the art.

As used herein, the term "and/or" includes any and all combinations of one or more of the associated listed items.

The terminology used herein is for the purpose of describing specific embodiments only and is not intended to limit the present disclosure. As used herein, the singular forms "a", "an" and "the" are intended to include the plural forms as well, unless the context clearly indicates otherwise. It will be further understood that as used herein, the terms "comprise" and/or "consist of ..." specify the presence of the stated features, integers, steps, operations, elements, and/or components, but do not preclude the presence or addition of one or more other features, integers, steps, operations, elements, components, and/or groups thereof.

Embodiments described herein may be described with reference to plan and/or sectional views in idealized representations of the present disclosure. Accordingly, the example illustrations may be modified in accordance with the manufacturing process and/or the tolerance. Therefore, the embodiments are not limited to the embodiments shown in the drawings, but further include modifications of configurations formed based on a manufacturing process. Therefore, the regions illustrated in the figures have schematic properties, and the shapes of the regions shown in the figures illustrate specific shapes of regions of elements, but are not intended to be limiting.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the existing art and the present disclosure, and will not be interpreted in an idealized or overly formal sense unless expressly so defined herein.

To implement efficient virtual memory management, the CHI protocol provides distributed virtual memory operations (DVMOp), which include a TLB maintenance instruction TLBI for invalidation operations of a translation lookaside at different granularities, so that virtual memory spaces of different processes can be effectively managed, and a physical memory is invisible to an application program, thereby implementing isolation of software and hardware.

TLBI operations are performed only according to ELs, virtual addresses (VA) and ASIDs, which means that the invalidation operation information may include EL information, ASID information and VA information. Current TLBI operations supported by the CHI protocol are shown in tables 1 and 2 below:

**Table 1**

| ASID valid | VA valid | Operation | ARM Instruction |
|---|---|---|---|
| 0b0 | 0b0 | TLBI ALL EL1 | TLBI ALLE1 |
| 0b0 | 0b1 | TLBI by VA EL1 | TLBI VAAE1 |
| 0b1 | 0b0 | TLBI by ASID EL1 | TLBI ASIDE 1 |
| 0b1 | 0b1 | TLBI by ASID and VA EL1 | TLBI VAE1 |

Table 1 shows TLBI operations corresponding to ARM instructions associated with the invalidation operation information at a first exception level (EL1). As shown in table 1, in the case that both the ASID and the VA are invalid, the "TLBI ALLE1" instruction in the ARM instruction set is executed so that all request nodes (RNs) at EL1 perform the TLBI operation; in the case that the ASID is invalid and the VA is valid, the "TLBI VAAE1" instruction in the ARM instruction set is executed so that RNs matched with the VA at EL1 perform the TLBI operation; in the case that the ASID is valid and the VA is invalid, the "TLBI ASIDE1" instruction in the ARM instruction set is executed so that the RNs matched with the ASID at EL1 perform the TLBI operation; and in the case that both the ASID and the VA are valid, the "TLBI VAE1" instruction in the ARM instruction set is executed so that the RNs matched with both the ASID and the VA at EL1 perform the TLBI operation.

**Table 2**

| ASID valid | VA valid | Operation | ARM Instruction |
|---|---|---|---|
| 0b0 | 0b0 | TLBI ALL EL3 | TLBI ALLE3 |
| 0b0 | 0b1 | TLBI by VA EL3 | TLBI VAE3 |
| 0b1 | 0b0 | Not Support | NA |
| 0b1 | 0b1 | Not Support | NA |

Table 2 shows TLBI operations corresponding to ARM instructions associated with the invalidation operation information at a third exception level (EL3). As shown in Table 2, in the case of that both the ASID and the VA are invalid, the "TLBI ALLE3" instruction in the ARM instruction set is executed so that all RNs at EL3 perform the TLBI operation; in the case that the ASID is invalid and the VA is valid, the "TLBI VAE3" instruction in the ARM instruction set is executed so that RNs matched with the VA at EL3 perform the TLBI operation; in the case that the ASID is valid and the VA is invalid, and in the case that both the ASID and the VA are valid, since there is no corresponding operation instruction in the ARM instruction set, that is, no corresponding operations are defined in the ARM instruction set, the ARM instruction set does not support the corresponding TLBI operations, and the CHI protocol does not give corresponding solutions.

As can be seen from tables 1 and 2 above, the current CHI protocol does not support ASID related TLBI operations at EL3, but some non-ARM instruction sets, such as RISC-V instruction set, support ASID related TLBI operation in M-mode (EL3). This leads to a compatibility problem when implementing the CHI protocol in a SoC that includes a non-ARM instruction set based CPU.

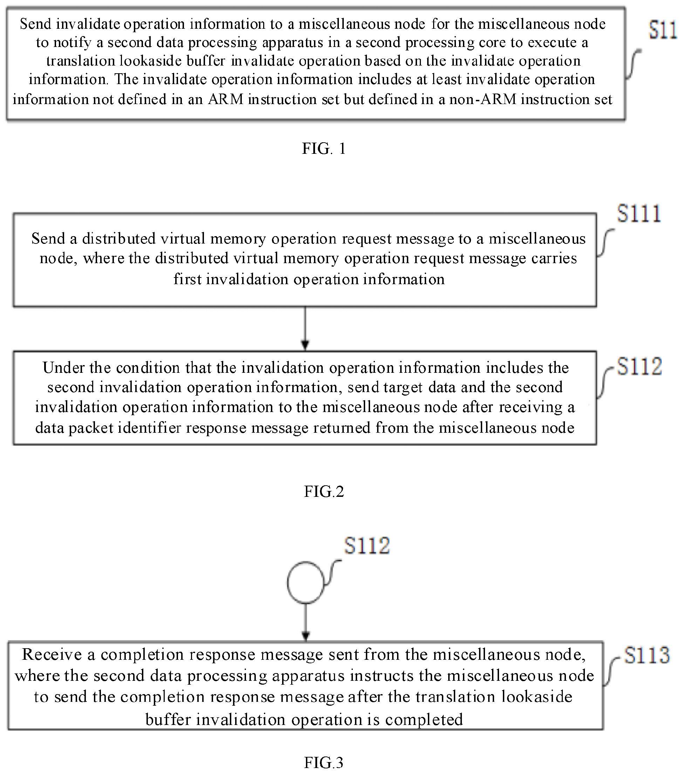

To solve the above problem, an embodiment of the present disclosure provides a translation lookaside buffer invalidation method, which is applied to (performed by) a first data processing apparatus in a first processing core. The first data processing apparatus may be a request node (also referred to as an RN). It should be noted that, in some embodiments, different data processing apparatuses may be located in different processing cores of the same CPU. In some embodiments, a request node represents a processor core, and in some scenarios may also represent a cluster where multiple processor cores are present within a single request node. Therefore, the first data processing apparatus and the second data processing apparatus described below in the embodiments of the present disclosure may be different request nodes, for example, different cores in the same cluster, or different cores in different clusters. As shown in FIG. 1, the translation lookaside buffer invalidation method includes the following operation S11.

At operation S11, sending invalidation operation information to a miscellaneous node for the miscellaneous node to notify a second data processing apparatus in a second processing core to execute a translation lookaside buffer (TLB) invalidation operation based on the invalidation operation information. The invalidation operation information includes at least invalidation operation information not defined in an ARM instruction set but defined in a non-ARM instruction set.

The first data processing apparatus in the first processing core sends invalidation operation information to a miscellaneous node (MN) on a bus, and then the miscellaneous node forwards the invalidation operation information to another data processing apparatus in another processing core of the same CPU for said another data processing apparatus to execute the TLBI operation based on the invalidation operation information. The invalidation operation information is invalidation operation information not defined in an ARM instruction set but defined in a non-ARM instruction set. Illustratively, the invalidation operation information is invalidation operation information defined in the RISC-V instruction set but not defined in the ARM instruction set, that is, information in table 2 corresponding to the case that the ASID is valid but the VA is invalid, and the case that both the ASID and the VA are valid at EL3. Therefore, the CHI protocol is extended, the ARM instruction set is complemented, and the compatibility problem of a SOC including a non-ARM instruction set based CPU is solved.

In the translation lookaside buffer invalidation method according to the embodiment of the present disclosure, a first data processing apparatus in a first processing core sends invalidation operation information to a miscellaneous node, where the invalidation operation information includes at least invalidation operation information not defined in an ARM instruction set but defined in a non-ARM instruction set for the miscellaneous node to notify a second data processing apparatus in a second processing core to execute a translation lookaside buffer invalidation operation based on the invalidation operation information. Therefore, in the embodiment of the present disclosure, the CHI protocol is extended, translation lookaside buffer invalidation (TLBI) operations supported by the CHI protocol are complemented to support omnibearing TLBI operations, and the CHI protocol is decoupled from the instruction set adopted by the processing core, so that the CHI protocol can be compatible with more instruction sets, thereby solving the compatibility problem of a SOC including a non-ARM instruction set based CPU, and improving the extensibility and applicability.

In some embodiments, the non-ARM instruction set may be a RISC-V instruction set.

In some embodiments, the invalidation operation information not defined in the ARM instruction set but defined in the non-ARM instruction set includes first invalidation operation information, or first invalidation operation information and second invalidation operation information. The first invalidation operation information may include EL information and ASID information, and the second invalidation operation information may include VA information, where the EL information may be third exception level (EL3) information. In other words, the invalidation operation information not defined in the ARM instruction set but defined in the non-ARM instruction set includes EL3 information and ASID information, or EL3 information, ASID information and VA information.

Taking the non-ARM instruction set being a RISC-V instruction set as an example, the RISC-V instruction set provides instructions Sfence.VAM and Hfence.VVAM for maintenance operations of the TLB, where Sfence.VAM supports operations in S-mode (corresponding to EL1 of the ARM architecture) and M-mode (corresponding to EL3 of the ARM architecture), and the two instructions further involve operations for ASID and VA. A mapping relationship between the RISC-V instruction set and the ARM instruction set for TLBI operations is shown in table 3 below:

**Table 3**

| RISC-V | ARM | Operation | CHI Support |
|---|---|---|---|
| Sfence VAM All S | TLBI ALLE1 | TLBI ALL | Y |
| Sfence VAM VA S | TLBI VAAE1 | TLBI by VA | Y |
| Sfence VAM ASID S | TLBI ASIDE 1 | TLBI by ASID | Y |
| Sfence VAM VAA S | TLBI VAE1 | TLBI by ASID and VA | Y |
| Sfence VAM All M | TLBI ALLE3 | TLBI ALL | Y |
| Sfence VAM VA M | TLBI VAE3 | TLBI by VA | Y |
| Sfence VAM ASID M | NA | TLBI by ASID | N |
| Sfence VAM VAA M | NA | TLBI by ASID and VA | N |

As shown in table 3, in addition to the invalidation operation information not defined in the ARM instruction set but defined in the non-ARM instruction set, the invalidation operation information further includes invalidation operation information defined in both the ARM instruction set and the non-ARM instruction set. In other words, the invalidation operation information further includes third invalidation operation information, or further includes third invalidation operation information and fourth invalidation operation information. The third invalidation operation information includes EL information, and the fourth invalidation operation information includes VA information. The third invalidation operation information is first exception level information or third exception level information. In other words, the invalidation operation information further includes EL information (EL1 information or EL3 information), or the invalidation operation information further includes EL information (EL1 information or EL3 information) and VA information. Further, as shown in table 3, the EL information in the first invalidation operation information may be EL1 information, which means that the first invalidation operation information may be EL1 information and ASID information.

As can be seen from table 3, the current CHI protocol does not support ASID-related TLBI operations at EL3, and through the extension of the CHI protocol according to the embodiments of the present disclosure, for example, the instructions Sfence VAM ASID M and Sfence VAM VAA M in the RISC-V instruction set can also be correctly processed in the CHI protocol.

In some embodiments, as shown in FIG. 2, sending the invalidation operation information to the miscellaneous node (operation S11) includes the following operations S111 and S112.

At operation S111, sending a distributed virtual memory operation request message to a miscellaneous node, where the distributed virtual memory operation request message carries first invalidation operation information.

The first data processing apparatus in the first processing core carries the first invalidation operation information (i.e., EL information and ASID information) in a distributed virtual memory operation (DVMOp) request message (DVMOp message) sent to the miscellaneous node, so that the miscellaneous node notifies other data processing apparatuses in other processing cores of a CPU to which the first data processing apparatus belongs of the first invalidation operation information.

At operation S112, under the condition that the invalidation operation information includes the second invalidation operation information, sending target data and the second invalidation operation information to the miscellaneous node after receiving a data packet identifier response message (DBIDResp) returned from the miscellaneous node.

After receiving the DVMOp message, the miscellaneous node returns a data packet identifier response message (DBIDResp) to the first data processing apparatus. If the invalidation operation information further includes the second invalidation operation information, the first data processing apparatus sends the second invalidation operation information to the miscellaneous node along with target data (NCBWrData), so that the miscellaneous node notifies other data processing apparatuses in other processing cores of a CPU to which the first data processing apparatus belongs of the second invalidation operation information. The target data is data to be processed by the first data processing apparatus.

It should be noted that the miscellaneous node may carry the invalidation operation information (the first invalidation operation information, or the first invalidation operation information and the second invalidation operation information) in a snoop distributed virtual memory operation message (SnpDVMOp) and transmit it to the second data processing apparatus in the second processing core in a broadcast manner.

Under the condition that the invalidation operation information is the third invalidation operation information, or the invalidation operation information is the third invalidation operation information and the fourth invalidation operation information, the first data processing apparatus in the first processing core carries the third invalidation operation information (i.e., EL1 information or EL3 information) in a distributed virtual memory operation (DVMOp) request message sent to the miscellaneous node. Under the condition that the invalidation operation information further includes the fourth invalidation operation information, after receiving the data packet identifier response message (DBIDResp) returned from the miscellaneous node, the first data processing apparatus in the first processing core transmits the target data (i.e., NCBWrData) and the fourth invalidation operation information (VA information) to the miscellaneous node.

In some embodiments, as shown in FIG. 3, after sending the target data and the second invalidation operation information to the miscellaneous node (i.e., operation S112), the translation lookaside buffer invalidation method may further include the following operation S113.

At operation S113, receiving a completion response message sent from the miscellaneous node, where the second data processing apparatus instructs the miscellaneous node to send the completion response message after the translation lookaside buffer invalidation operation is completed.

After receiving the invalidation operation information from the miscellaneous node, the second data processing apparatus in the second processing core executes the TLBI operation based on the invalidation operation information, and returning a snoop distributed virtual memory operation (SnpDVMOp) response message (SnpResp_I) to the miscellaneous node. After receiving the snoop distributed virtual memory operation response message (SnpResp_I), the miscellaneous node returns a completion response message (Comp) to the first data processing apparatus in the first processing core, to notify the first data processing apparatus that the second data processing apparatus has completed the corresponding TLBI operation.

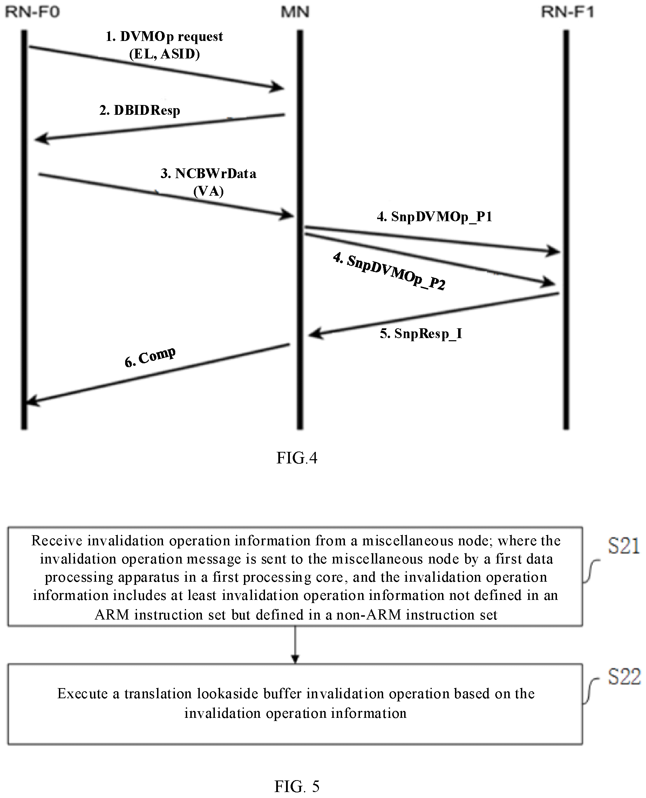

For clarity of explanation of the solution provided in the embodiments of the present disclosure, the following describes the translation lookaside buffer invalidation process in detail through a specific example in conjunction with FIG. 4. As shown in FIG. 4, RN-FO is a first data processing apparatus in processing core 0, RN-F1 is a second data processing apparatus in processing core 1, and the translation lookaside buffer invalidation process includes the following operations 1 to 6.

At operation 1, RN-F0 initiates a DVMOp request message to an MN on a bus, where the DVMOp request message carries EL information and ASID information in an address payload.

At operation 2, after receiving the DVMOp request message, the MN returns a data packet identifier response message (DBIDResp) to RN-F0.

At operation 3, after receiving the DBIDResp, RN-F0 sends the VA information carried in NCBWrData to the MN.

At operation 4, after receiving the NCBWrData carrying the VA information, the MN broadcasts a SnpDVMOp message of the corresponding TLBI operation. The SnpDVMOp message will be split into two parts, i.e., a SnpDVMOp_P1 message and a SnpDVMOp_P2 message. The SnpDVMOp_P1 message and the SnpDVMOp_P2 message carry EL information, ASID information and VA information.

At operation 5, after receiving the SnpDVMOp_P1 message and the SnpDVMOp_P2 message and performing the corresponding TLBI operation, RN-F1 returns a snoop distributed virtual memory operation response message (SnpResp_I) to the MN.

At operation 6, after receiving the SnpResp_I returned from RN-F1, the MN returns a Comp response message to RN-F0, thereby completing the processing flow of the whole transaction.

As can be seen from the above operations 1 to 6, the ASID-related TLBI operation at EL3 can be implemented simply by modifying the information carried in the DVMOp message and the message carrying the NCBWrData, and the processing flow can directly multiplex the processing flow for a conventional TLBI in the current CHI protocol.

The embodiments of the present disclosure are based on the CHI protocol, and extends the TLBI operations in the distributed virtual memory operation transaction supported by the CHI protocol, so that the CHI protocol can be compatible with more types of instruction set architectures. The embodiments of the present disclosure can be applied to all SOC systems which are built based on CHI protocols and require virtual memory maintenance.

Embodiments of the present disclosure further provides a translation lookaside buffer invalidation method, which is applied to (performed by) a second data processing apparatus in a second processing core. As shown in FIG. 5, the translation lookaside buffer invalidation method includes the following operations S21 and S22.

At operation S21, receiving invalidation operation information from a miscellaneous node; where the invalidation operation information is sent to the miscellaneous node by a first data processing apparatus in a first processing core, and the invalidation operation information includes at least invalidation operation information not defined in an ARM instruction set but defined in a non-ARM instruction set.

In some embodiments, the non-ARM instruction set includes a RISC-V instruction set.

In some embodiments, receiving the invalidation operation information from the miscellaneous node includes: receiving a snoop distributed virtual memory operation message (SnpDVMOp) broadcasted by the miscellaneous node, where the snoop distributed virtual memory operation message carries the invalidation operation information. In other words, the miscellaneous node may carry the invalidation operation information carried in the snoop distributed virtual memory operation (SnpDVMOp) and transmit it to the second data processing apparatus in the second processing core in a broadcast manner.

At operation S22, executing a translation lookaside buffer invalidation operation based on the invalidation operation information.

After receiving the invalidation operation information from the miscellaneous node, the second data processing apparatus in the second processing core executes the TLBI operation based on the invalidation operation information.

In the translation lookaside buffer invalidation method according to the embodiment of the present disclosure, after receiving the invalidation operation information from the miscellaneous node, the second data processing apparatus in the second processing core executes a translation lookaside buffer invalidation operation based on the invalidation operation information, where the invalidation operation information includes at least invalidation operation information not defined in an ARM instruction set but defined in a non-ARM instruction set. Therefore, in the embodiments of the present disclosure, the CHI protocol is extended, translation lookaside buffer invalidation (TLBI) operations supported by the CHI protocol are complemented to support omnibearing TLBI operations, and the CHI protocol is decoupled from the instruction set adopted by the processing core, so that the CHI protocol can be compatible with more instruction sets, thereby solving the compatibility problem of a SOC including a non-ARM instruction set based CPU, and improving the extensibility and applicability.

In some embodiments, the invalidation operation information not defined in the ARM instruction set but defined in the non-ARM instruction set includes first invalidation operation information, or first invalidation operation information and second invalidation operation information, where the first invalidation operation information includes exception level (EL) information and ASID information, and the second invalidation operation information includes VA information. The EL information is third exception level information or first exception level information. In other words, the invalidation operation information not defined in the ARM instruction set but defined in the non-ARM instruction set includes EL3 information and ASID information, or EL3 information, ASID information and VA information.

It should be noted that, as shown in table 3, the invalidation operation information may further include third invalidation operation information, or third invalidation operation information and fourth invalidation operation information. The third invalidation operation information includes EL information, and the fourth invalidation operation information includes VA information. The third invalidation operation information is first exception level information or third exception level information. In other words, the invalidation operation information further includes EL information (EL1 information or EL3 information), or the invalidation operation information further includes EL information (EL1 information or EL3 information) and VA information. Further, as shown in table 3, the EL information in the first invalidation operation information may be EL1 information, which means that the first invalidation operation information may be EL1 information and ASID information.

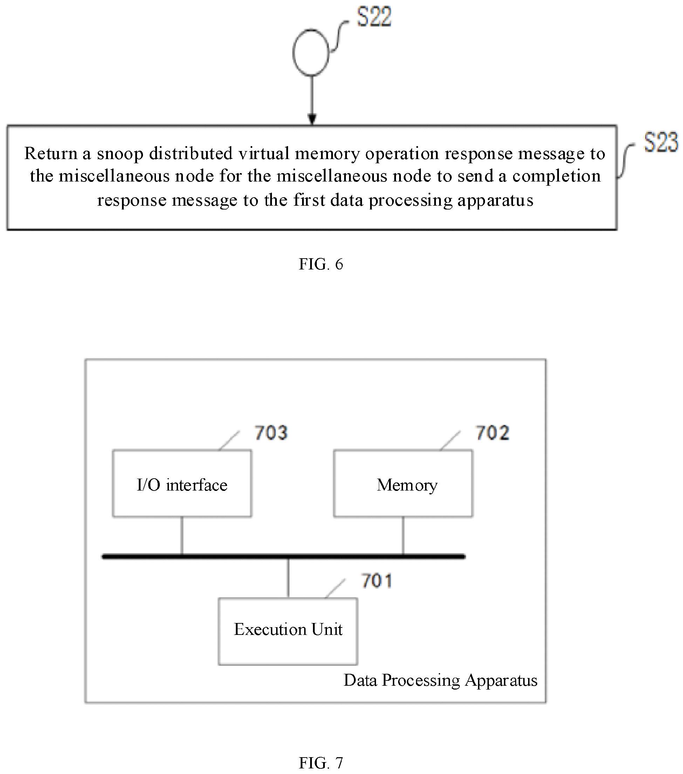

In some embodiments, as shown in FIG. 6, after executing the translation lookaside buffer invalidation operation based on the invalidation operation information (i.e., operation S22), the translation lookaside buffer invalidation method may further include the following operation S23.

At operation S23, returning a snoop distributed virtual memory operation response message to the miscellaneous node for the miscellaneous node to send a completion response message to the first data processing apparatus.

After performing the TLBI operation based on the invalidation operation information, the second data processing apparatus in the second processing core returns a snoop distributed virtual memory operation response message (SnpResp_I) to the miscellaneous node. After receiving the snoop distributed virtual memory operation response message (SnpResp_I), the miscellaneous node returns a completion response message (Comp) to the first data processing apparatus in the first processing core, to notify the first data processing apparatus that the second data processing apparatus has completed the corresponding TLBI operation.

An embodiment of the present disclosure further provides a data processing apparatus, which, as shown in FIG. 7, includes: at least one execution unit 701; a memory 702 having at least one program stored thereon, where when executed by the at least one execution unit, the at least one program causes the at least one execution unit to implement the translation lookaside buffer invalidation method according to the various embodiments described above; and at least one I/O interface 703 connected between the execution units and the memory and configured to enable information interaction between the execution units and the memory. The execution unit 701, the memory 702, and the I/O interfaces may jointly form a processor, such as a central processing unit (CPU), or a core of a processor.

The execution unit 701 is a device with a data processing capability. The memory 702 is a device with a data storage capability, including but not limited to, a random access memory (RAM, more specifically SDRAM, DDR, etc.), a read-only memory (ROM), an electrically erasable programmable read-only memory (EEPROM) or a flash memory (FLASH). The I/O interface (read/write interface) 703 is connected between the execution unit 701 and the memory 702 to enable information interaction between the execution unit 701 and the memory 702, and includes, but is not limited to, a data bus or the like.

In some embodiments, the execution unit 701, the memory 702, and the I/O interface 703 are interconnected via a bus, and further connected to other components of a computing device.

An embodiment of the present disclosure further provides a computer-readable medium having a computer program stored thereon which, when executed, causes the translation lookaside buffer invalidation method according to the various embodiments described above to be implemented.

Those of ordinary skill in the art will appreciate that all or some operations of the above described method, function modules/units in the apparatus may be implemented as software, firmware, hardware, and suitable combinations thereof. In a hardware implementation, the division between the function modules/units mentioned in the above description does not necessarily correspond to the division of physical components; for example, one physical component may have multiple functions, or one function or operation may be performed cooperatively by several physical components. Some or all physical components may be implemented as software executed by a processor, such as a CPU, a digital signal processor or microprocessor, or implemented as hardware, or implemented as an integrated circuit, such as an application specific integrated circuit. Such software may be distributed on a computer-readable medium which may include a computer storage medium (or non-transitory medium) and a communication medium (or transitory medium). The term computer storage medium includes volatile and nonvolatile, removable and non-removable media implemented in any method or technology for storage of information such as computer-readable instructions, data structures, program modules or other data, as is well known to those of ordinary skill in the art. The computer storage medium includes, but is not limited to, an RAM, an ROM, an EEPROM, a flash or any other memory technology, a CD-ROM, a digital versatile disk (DVD) or any other optical disk storage, a magnetic cartridge, a magnetic tape, a magnetic disk storage or any other magnetic storage device, or may be any other medium used for storing the desired information and accessible by a computer. Moreover, it is well known to those of ordinary skill in the art that a communication medium typically includes a computer-readable instruction, a data structure, a program module, or other data in a modulated data signal, such as a carrier wave or other transport mechanism, and may include any information delivery medium.
The present disclosure has disclosed exemplary embodiments, and although specific terms are employed, they are used and should be interpreted merely in a generic and descriptive sense, not for purposes of limitation. In some instances, as would be apparent to one skilled in the art, features, characteristics and/or elements described in combination with a particular embodiment may be used alone or in combination with features, characteristics and/or elements described in connection with another embodiment, unless expressly stated otherwise. It will, therefore, be understood by those skilled in the art that various changes in form and details may be made therein without departing from the scope of the present disclosure as set forth in the appended claims.

## Claims

1. A translation lookaside buffer invalidation method, applied to a first data processing apparatus in a first processing core, the method comprising:
sending invalidation operation information to a miscellaneous node for the miscellaneous node to notify a second data processing apparatus in a second processing core to execute a translation lookaside buffer invalidation operation based on the invalidation operation information; wherein the invalidation operation information comprises at least invalidation operation information not defined in an ARM instruction set but defined in a non-ARM instruction set.

2. The method according to claim 1, wherein the invalidation operation information not defined in the ARM instruction set but defined in the non-ARM instruction set comprises first invalidation operation information, or comprises first invalidation operation information and second invalidation operation information, wherein the first invalidation operation information comprises exception level (EL) information and address space identifier (ASID) information, and the second invalidation operation information comprises virtual address (VA) information; wherein the EL information is third exception level information.

3. The method according to claim 2, wherein sending the invalidation operation information to the miscellaneous node comprises:
sending a distributed virtual memory operation request message to a miscellaneous node, wherein the distributed virtual memory operation request message carries the first invalidation operation information; and
under a condition that the invalidation operation information comprises the second invalidation operation information, sending target data and the second invalidation operation information to the miscellaneous node after receiving a data packet identifier response message returned from the miscellaneous node.

4. The method according to claim 3, wherein after sending the target data and the second invalidation operation information to the miscellaneous node, the method further comprises:
receiving a completion response message sent from the miscellaneous node, wherein the miscellaneous node is instructed by the second data processing apparatus, after the translation lookaside buffer invalidation operation is completed, to send the completion response message.

5. The method according to any one of claims 1 to 4, wherein the non-ARM instruction set comprises a RISC-V instruction set.

6. A translation lookaside buffer invalidation method, applied to a second data processing apparatus in a second processing core, the method comprising:
receiving invalidation operation information from a miscellaneous node; wherein the invalidation operation information is sent to the miscellaneous node by a first data processing apparatus in a first processing core, and the invalidation operation information comprises at least invalidation operation information not defined in an ARM instruction set but defined in a non-ARM instruction set; and
executing the translation lookaside buffer invalidation operation based on the invalidation operation information.

7. The method according to claim 6, wherein the invalidation operation information not defined in the ARM instruction set but defined in the non-ARM instruction set comprises first invalidation operation information, or first invalidation operation information and second invalidation operation information, wherein the first invalidation operation information comprises exception level (EL) information and address space identifier (ASID) information, and the second invalidation operation information comprises virtual address (VA) information; wherein the EL information is third exception level information or first exception level information.

8. The method according to claim 6, wherein receiving the invalidation operation information from the miscellaneous node comprises:
receiving a snoop distributed virtual memory operation message broadcasted by the miscellaneous node, wherein the snoop distributed virtual memory operation message carries the invalidation operation information.

9. The method according to claim 6, wherein after executing the translation lookaside buffer invalidation operation based on the invalidation operation information, the method further comprises:
returning a snoop distributed virtual memory operation response message to the miscellaneous node for the miscellaneous node to send a completion response message to the first data processing apparatus.

10. The method according to any one of claims 6 to 9, wherein the non-ARM instruction set comprises a RISC-V instruction set.

11. A data processing apparatus, comprising:
one or more execution units;
a storage device having one or more programs stored thereon;
wherein when executed by the one or more execution units, the one or more programs cause the one or more execution units to implement the translation lookaside buffer invalidation method according to any one of claims 1 to 5, or the translation lookaside buffer invalidation method according to any one of claims 6 to 10; and
one or more I/O interfaces connected between the execution units and the storage device and configured to enable information interaction between the execution units and the storage device.

12. A computer-readable medium storing a computer program thereon which, when executed, causes the translation lookaside buffer invalidation method according to any one of claims 1 to 5, or the translation lookaside buffer invalidation method according to any one of claims 6 to 10 to be implemented.
